# EUROPÄISCHE PATENTSCHRIFT

(11) **EP 1 960 747 B1**
(45) Veröffentlichungstag und Bekanntmachung des Hinweises auf die Patenterteilung: **14.10.2009**
(21) Anmeldenummer: 06818712.9
(22) Anmeldetag: 22.11.2006
(51) Int. Cl.: G01G 23/00

(54) **ELEKTRONISCHE WAAGE**
ELECTRONIC SCALE
BALANCE ELECTRONIQUE

(30) Priorität: 09.12.2005 DE 102005058851
(43) Veröffentlichungstag der Anmeldung: 27.08.2008
(73) Patentinhaber: SARTORIUS AG, 37075 Göttingen (DE)
(72) Erfinder: BERTOLDI, Jean-Claude, 37079 Göttingen (DE); FÜLSCHER, Klaus, 37079 Göttingen (DE); KIRCHHOFF, Rainer, 37197 Hattorf (DE); WEITEMEIER, Swen, 37139 Lödingsen (DE)
(86) Internationale Anmeldenummer: PCT/EP2006/011159
(87) Internationale Veröffentlichungsnummer: WO 2007/065561

(56) Entgegenhaltungen:
- WO-A-01/88492
- DE-A1- 4 006 375
- DE-A1- 4 424 826

## Beschreibung

Die Erfindung bezieht sich auf eine elektronische Waage mit einer Anzeigeeinheit, mit mindestens einer Bedienungstaste, mit einer digitalen Signalverarbeitungseinheit und mit einer digitalen Schnittstelle zu einer übergeordneten EDV-Anlage.

Waagen dieser Art sind allgemein bekannt und beispielsweise in der DE 44 24 826 A1 beschrieben.

Waagen dieser Art werden beispielsweise dazu eingesetzt, Mischungen aus einzelnen Komponenten nach vorgegebenen Rezepten herzustellen. Das Anmischen von Lacken mit bestimmten Farbtönen aus wenigen Grundfarben ist solch ein Anwendungsfall.

Da sowohl die Waagen als auch die benötigten Komponenten für einen zügigen Arbeitsablauf gut zugänglich sein müssen, ist die Gefahr von Diebstählen groß.

Die wo 01/88492 bezieht sich auf eine Laborwaage in einem Netzwerk, die darüber hinaus eine Steuerfunktion für weitere Geräte im Netzwerk aufweist, die sich typischerweise in einem Labor befinden. Zu Qualitätssicherungszwecken können dabei auch Steuerdaten von den weiteren Geräten zu der Laborwaage übertragen werden, um die Laborwaage ggf. zu sperren.

Aufgabe der Erfindung ist es daher, eine Waage der eingangs genannten Art anzugeben, die sowohl eine unautorisierte Benutzung als auch einen Diebstahl wesentlich erschwert und dadurch unattraktiv macht.

Erfindungsgemäß wird dies dadurch erreicht, dass die digitale Signalverarbeitungseinheit aktivierbare Schaltmittel oder Programmteile zur Verriegelung aufweist, die die Anzeige des Wägeergebnisses nur so lange freigeben, wie die übergeordnete EDV-Anlage mit der Waage in Kommunikation steht, in der restlichen Zeit jedoch sperren, und dass die Aktivierung dieser Schaltmittel oder Programmteile zur Verriegelung in einem netzausfallsicheren Speicher gespeichert ist.

Im aktivierten Zustand dieser Schaltmittel oder Programmteile zur Verriegelung ist die Waage also nur so lange benutzbar, wie die übergeordnete EDV-Anlage mit der Waage in aktiver Datenkommunikation steht. Solange der Benutzer der Waage Mischaufträge von der EDV-Anlage abarbeitet, ist die Waage also normal benutzbar. Sind die Mischaufträge abgearbeitet, beendet die übergeordnete EDV-Anlage die Datenkommunikation und die Waage geht automatisch in den gesperrten Zustand. Dadurch geht die Waage auch bei einem Unterbrechen der Verbindung zur übergeordneten EDV-Anlage in den gesperrten Zustand. Durch die netzausfallsichere Speicherung der Aktivierung der Schaltmittel oder Programmteile zur Verriegelung bleibt die Waage auch nach einer Unterbrechung der Spannungsversorgung im gesperrten Zustand, falls sie vor der Unterbrechung der Spannungsversorgung im gesperrten Zustand war. Durch diese Maßnahme ist die Waage sowohl in Arbeitspausen als auch im Falle eines Diebstahls unbrauchbar.

In einer vorteilhaften Ausgestaltung weist die Anzeige der Waage ein Verriegelungssymbol auf - z. B. in Form eines Vorhängeschlosses oder eines Schlüssels - das bei Aktivierung der Schaltmittel oder Programmteile zur Verriegelung ebenfalls aktiviert ist. Dadurch erkennt der Benutzer der Waage, dass die Waage nicht etwa einen Fehler aufweist, sondern absichtlich gesperrt ist. Er erkennt dadurch auch, dass ein Diebstahl zwecklos ist.

Die netzausfallsichere Speicherung des aktivierten Zustandes der Schaltmittel oder Programmteile zur Verriegelung wird zweckmäßigerweise in einem EEPROM gespeichert, wobei dieses EEPROM auch Teil eines Mikroprozessors sein kann.

Der Schutz der Waage vor unautorisierter Benutzung und/oder Diebstahl ist natürlich nur dann wirkungsvoll, wenn die Deaktivierung der Schaltmittel oder Programmteile zur Verriegelung für normale Bediener praktisch unmöglich ist. Deshalb ist vorteilhafterweise vorgesehen, dass die Schaltmittel oder Programmteile zur Verriegelung nur durch die Eingabe eines Passwortes in die Bedienungstasten der Waage oder durch ein spezielles Signal von der übergeordneten EDV-Anlage deaktivierbar sind.

Die Schaltmittel oder Programmteile zur Verriegelung sperren zusammen mit der Anzeige des Wägeergebnisses auch die Ausgabe des Wägeergebnisses über die digitale Schnittstelle. Dann ist auch die Benutzung der gesperrten Waage mit einer evtl. vorhandenen Zweitanzeige oder einem Messwertdrucker unmöglich.

Die Erfindung wird im Folgenden am Beispiel einer konkreten Ausführungsform anhand der Figuren beschrieben. Dabei zeigt:
- Figur 1: die Waage im Normalzustand,
- Figur 2: ein Blockschaltbild der Waage,
- Figur 3: die Waage im verriegelten Zustand und
- Figur 4: ein Flussdiagramm zur Erläuterung der Schaltmittel oder Programmteile zur Verriegelung.

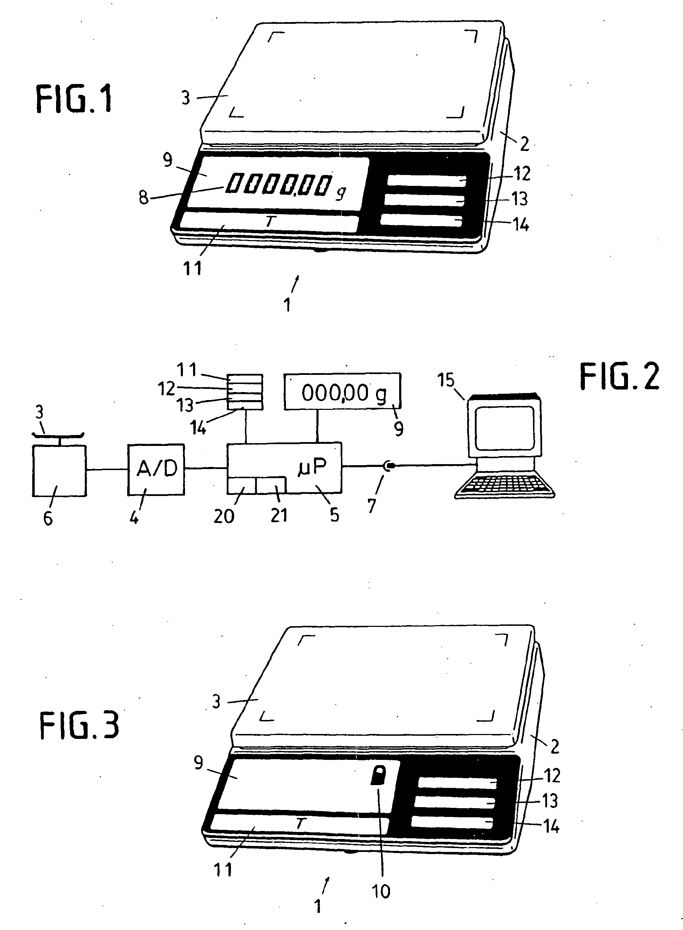

In Figur 1 erkennt man eine übliche Waage 1 mit einem Gehäuse 2, einer Waagschale 3, einer Anzeigeeinheit 9 und Bedienungstasten 11...14. Die Anzeigeeinheit 9 zeigt in Figur 1 das Wägeergebnis 8 an, bei leerer Waagschale also 0000.00g. Die Bedienungstaste 11 dient der Tarierung ( = Nullstellung) der Anzeige für das Wägeergebnis, die Bedienungstasten 12...14 dienen je nach Applikation verschiedenen Zwecken - z. B. der Ansteuerung eines Druckers, dem Quittieren des Abschlusses der Dosierung einer Komponente, etc. - und sind dementsprechend applikationsspezifisch beschriftet (in Figur 1 unbeschriftet dargestellt). Die Anzahl der Bedienungstasten kann auch geringer sein. Weiter weist die Waage in Figur 1 eine digitale Schnittstelle auf, die sich auf der Rückseite der Waage befindet und daher in Figur 1 nicht erkennbar ist. Diese Schnittstelle wird häufig als Datenausgang bezeichnet, obwohl über sie nicht nur Daten von der Waage z. B. an eine angeschlossene EDV-Anlage übertragen werden können, sondern in umgekehrter Richtung auch Daten und/oder Befehle von der angeschlossenen EDV-Anlage zur Waage.

Ein Blockschaltbild der Waage ist in Figur 2 dargestellt: Das Wägesystem 6 ist nur schematisch angedeutet; es liefert im dargestellten Beispiel ein analoges Ausgangssignal, das von einem Analog/Digital-Wandler 4 digitalisiert wird und als digitales Signal einer digitalen Signalverarbeitungseinheit 5 zugeführt wird. Die digitale Signalverarbeitungseinheit 5 steuert die Anzeigeeinheit 9 und die digitale Schnittstelle 7 an und fragt auch die Betätigung der Bedienungstasten 11...14 ab. Die digitale Signalverarbeitungseinheit 5 wird meist durch einen Mikroprozessor realisiert. - Die bisher beschriebenen Teile der Waage sind in ihrem mechanischen und elektrischen Aufbau, sowie ihrer Funktion allgemein bekannt und daher im Vorstehenden nur ganz kurz beschrieben.

Die erfindungsgemäße Waage weist nun Schaltmittel oder Programmteile zur Verriegelung 20 auf, die die Anzeige des Wägeergebnisses 8 in der Anzeigeeinheit 9 sperren (Details siehe unten). In einem netzausfallsicheren Speicher 21 - beispielsweise einem EEPROM - wird dabei abgespeichert, ob die Schaltmittel oder Programmteile zur Verriegelung aktiviert oder nicht aktiviert sind. In Figur 1 ist die Waage im nicht-verriegelten Zustand gezeigt. In Figur 3 ist die Waage im verriegelten Zustand gezeigt: Die Anzeigeeinheit 9 zeigt kein Wägeergebnis an, stattdessen ein Verriegelungssymbol 10, das in Figur 3 die vereinfachte Form eines Vorhängeschlosses hat, das aber z. B. auch die Form eines Schlüssels aufweisen kann. Gleichzeitig ist auch die Ausgabe von Wägeergebnissen über die Datenschnittstelle gesperrt.

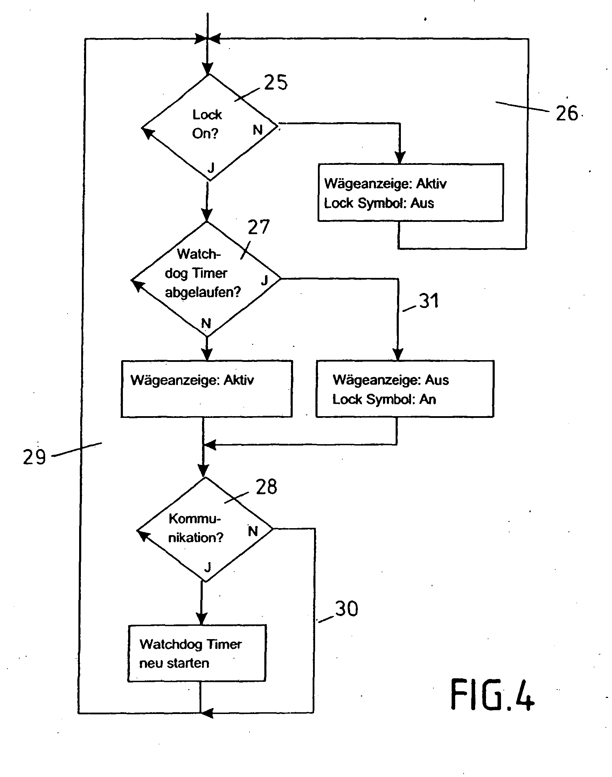

Die Details der Arbeitsweise der Schaltmittel oder Programmteile zur Verriegelung 20 ergeben sich aus dem Flussdiagramm in Figur 4: In einem ersten Entscheidungsschritt (Bezugszeichen 25) wird geprüft, ob im netzausfallsicheren Speicher 21 die Verriegelung ("Lock") aktiviert ist oder nicht aktiviert ist. Bei nicht aktivierter Verriegelung ist die Wägeanzeige aktiv - zeigt also das Wägeresultat an - und das Verriegelungssymbol 10 ist ausgeschaltet; auch die Ausgabe der Wägeergebnisse über die digitale Schnittstelle ist aktiv. In diesem Zustand verbleibt die Waage dauernd (Schleife 26). Damit verhält sich die Waage wie eine übliche Waage.

Wird im ersten Entscheidungsschritt jedoch festgestellt, dass die Verriegelung aktiviert ist, so wird in einem zweiten Entscheidungsschritt 27 geprüft, ob ein Watchdog-Timer (siehe unten) abgelaufen ist. Ist der Watchdog-Timer noch nicht abgelaufen, so bleibt die Anzeige des Wägeergebnisses und die Ausgabe über die Datenschnittstelle aktiv und das Verriegelungssymbol 10 ausgeschaltet. Wird dann im dritten Entscheidungsschritt 28 festgestellt, dass die übergeordnete EDV-Anlage mit der Waage über die digitale Schnittstelle in Kommunikation steht, so wird der Watchdog-Timer neu gestartet und es wird wieder mit dem ersten Entscheidungsschritt 25 begonnen. Solange die übergeordnete EDV-Anlage mit der Waage in Kommunikation steht, bleibt die Waage also in dieser Schleife 29. Für den Bediener der Waage verhält sich die Waage also ebenfalls wie eine normale Waage, obwohl die Verriegelung aktiviert ist.

Erst wenn die übergeordnete EDV-Anlage nicht mehr mit der Waage kommuniziert, wird der Nebenweg 30 eingeschlagen, dadurch der Watchdog-Timer nicht mehr neu gestartet, so dass nach Ablauf der "Schonfrist" des Watchdog-Timers im zweiten Entscheidungsschritt 27 der Nebenweg 31 eingeschlagen wird, die Anzeige des Wägeergebnisses in der Anzeigeeinheit 9 und die Ausgabe über die Schnittstelle 7 gesperrt wird und das Verriegelungssymbol 10 aufgetastet wird. - Die Schleife 29 wird in diesem Fall also über die Nebenwege 31 und 30 durchlaufen und die Waage bleibt für den Benutzer tot. Aus diesem gesperrten Zustand wird die Waage weder durch das Trennen der Kommunikationsverbindung zur übergeordneten EDV-Anlage herausgeholt noch durch das Trennen der Netzverbindung. Nach dem Wiedereinschalten der Spannungsversorgung beginnt die Waage nämlich mit dem ersten Entscheidungsschritt 25 und stellt fest, dass die Verriegelung aktiviert ist. Im zweiten Entscheidungsschritt 27 stellt sie fest, dass der Watchdog-Timer abgelaufen ist und schlägt daher den Nebenweg 31 ein, sperrt die Anzeige des Wägeergebnisses und die Ausgabe über die Schnittstelle 7, und aktiviert das Verriegelungssymbol 10. Da bei einem Versuch einer missbräuchlichen Nutzung der Waage auch keine Kommunikation mit der übergeordneten EDV-Anlage mit dem richtigen Datenprotokoll stattfindet, bleibt die Waage im gesperrten Zustand.

Fällt beim bestimmungsgemäßem Gebrauch der Waage jedoch die Netzspannung aus, so wird bei der Wiederkehr der Spannung die Waage zwar auch über den Nebenweg 31 in den verriegelten Zustand der Anzeige übergehen. Aber spätestens wenn auch die übergeordnete EDV-Anlage wieder hochgefahren ist und sich per digitaler Schnittstelle bei der Waage meldet, wir dies beim Entscheidungsschritt 28 bemerkt, nicht mehr der Nebenweg 30 benutzt, sondern der Watchdog-Timer gestartet und folglich beim nächsten Durchlaufen der Schleife 29 beim Entscheidungsschritt 27 wieder der direkte Weg eingeschlagen und die Anzeige des Wägeergebnisses freigegeben. Dadurch benimmt sich die Waage bei aktivierter Verriegelung auch in diesem Fall wie eine normale Waage. - Damit die übergeordnete EDV-Anlage beim ersten Durchlaufen der Schleife 29, bei dem die Anzeige und im allgemeinen auch die Ausgabe des Wägeergebnisses über die digitale Schnittstelle gesperrt ist, erkennen kann, dass die Waage noch gesperrt ist, wird im gesperrten Zustand zweckmäßigerweise ein Signal "Waage gesperrt" an die EDV-Anlage zurückgeschickt. Dadurch kann die EDV-Anlage eine im Augenblick noch aktive Sperrung der Waage unterscheiden von evtl. Fehlern in der Kommunikation mit der Waage.

Zusammenfassend benimmt sich die Waage beim bestimmungsgemäßen Gebrauch trotz aktivierter Verriegelung wie eine normale Waage. Erst bei dem Versuch, die Waage ohne die Kommunikation mit der übergeordneten EDV-Anlage zu nutzen, zeigt sie, dass sie verriegelt ist und sperrt die Anzeige des Wägeergebnisses und die Ausgabe über die Schnittstelle 7. Und diese Sperre lässt sich mit einfachen Methoden nicht umgehen.

Zu dem beschriebenen Sicherheitskonzept gehört es natürlich, dass die im Speicher 21 abgespeicherte Aktivierung der Verriegelung auch im Rahmen des Setup-Menüs nicht ohne weiteres rückgängig gemacht werden kann. Die Verriegelung lässt sich vorteilhafterweise an der Waage nur nach der Eingabe eines Passwortes deaktivieren. Unter Eingabe eines Passwortes wird dabei das Betätigen der Bedienungstasten 11...14 in einer vorgegebenen Abfolge und einer vorgegebenen Anzahl der Betätigungen verstanden. - Bei der Legitimation durch ein Passwort können selbstverständlich alle bekannten zusätzlichen Sicherheitsvorkehrungen eingesetzt werden, wie z. B. der Abbruch des Legitimationsvorganges nach drei Falscheingaben des Passwortes. - In ähnlicher Weise kann die Deaktivierung der Verriegelung über die Schnittstelle zur übergeordneten EDV-Anlage von der Benutzung eines speziellen Deaktivierungssignals durch die EDV-Anlage abhängig gemacht werden. Die Erzeugung dieses Deaktivierungssignals kann in der EDV-Anlage zusätzlich durch ein Passwort gesichert sein.

Technische Einzelheiten des anhand von Figur 4 beschriebenem Programm zur Verriegelung kann jeder Fachmann leicht selbst festlegen und ergänzen - wie. z. B. die Festlegung der Länge des Watchdog-Timers in Abstimmung mit der Programmierung der übergeordneten EDV-Anlage oder die Ergänzung einer Verzögerung in den Schleifen 26 und 29, damit diese z. B. nur einmal pro Minute durchlaufen werden. Dasselbe gilt für die Einbindung dieses Programms zur Verriegelung in das übrige Programm der digitalen Signalverarbeitungseinheit.

Die Erfindung wurde im Vorstehenden anhand eines Realisierungsbeispieles beschrieben. Selbstverständlich kann die Verriegelung und die netzausfallsichere Speicherung nicht nur durch entsprechende Programme, beispielsweise eines Mikroprozessors, realisiert werden, sondern auch durch entsprechende Hardware-Lösungen. Beispielsweise eignet sich ein bistabiler, elektrisch betätigbarer Schalter als netzausfallsicheres Speicherelement.

Auch für die Ansteuerung des Verriegelungssymbols 10 gibt es alternative Ausgestaltungsmöglichkeiten: Sind die Schaltmittel oder Programmteile zur Verriegelung aktiviert, so kann beim Durchlaufen der Schleife 29 in Figur 4 über den direkten Weg - also bei nicht abgelaufenem Watchdog-Timer und aktiver Kommunikation mit der übergeordneten EDV-Anlage - das Verriegelungssymbol 10 zusammen mit der Anzeige des Wägeergebnisses aktiviert sein. Dies signalisiert dem Benutzer der Waage, dass die Schaltmittel oder Programmteile zur Verriegelung aktiviert sind und die Anzeige aber wegen der laufenden Kommunikation mit der übergeordneten EDV-Anlage freigegeben ist. - In einer dritten Ausgestaltung wird das Verriegelungssymbol 10 beim Durchlaufen des Nebenweges 31 in Figur 4 blinkend angesteuert, um besonders auf die Sperrung aufmerksam zu machen.

### Bezugszeichenliste

- 1: Waage
- 2: Gehäuse
- 3: Waagschale
- 4: Analog/Digital-Wandler
- 5: digitale Signalverarbeitungseinheit
- 6: Wägesystem
- 7: digitale Schnittstelle
- 8: Wägeergebnis
- 9: Anzeigeeinheit
- 10: Verriegelungssymbol
- 11,12,13,14: Bedienungstasten
- 15: übergeordnete EDV-Anlage
- 20: Schaltmittel oder Programmteile zur Verriegelung
- 21: netzausfallsicherer Speicher
- 25,27,28: Entscheidungen
- 26, 29: Schleifen
- 30,31: Nebenwege

## Patentansprüche

1. Elektronische Waage (1) mit einer Anzeigeeinheit (9), mit mindestens einer Bedienungstaste (11...14), mit einer digitalen Signalverarbeitungseinheit (5) und mit einer digitalen Schnittstelle (7) zu einer übergeordneten EDV-Anlage (15), wobei die digitale Signalverarbeitungseinheit (5) aktivierbare Schaltmittel oder Programmteile zur Verriegelung (20) aufweist, **dadurch gekennzeichnet, dass** die aktivierbaren Schaltmittel oder Programmteile zur Verriegelung (20) die Anzeige des Wägeergebnisses nur so lange freigeben, wie die übergeordnete EDV-Anlage (15) mit der Waage in Kommunikation steht, in der restlichen Zeit jedoch sperren, und dass die Aktivierung dieser Schaltmittel oder Programmteile zur Verriegelung in einem netzausfallsicheren Speicher (21) gespeichert ist.

2. Elektronische Waage nach Anspruch 1, **dadurch gekennzeichnet, dass** in der Anzeigeeinheit (9) der Waage ein Verriegelungssymbol (10) vorhanden ist, das bei Aktivierung der Schaltmittel oder Programmteile zur Verriegelung (20) angesteuert wird.

3. Elektronische Waage nach Anspruch 2, **dadurch gekennzeichnet, dass** das Verriegelungssymbol (10) die Form eines Vorhängeschlosses hat.

4. Elektronische Waage nach Anspruch 2, **dadurch gekennzeichnet, dass** das Verriegelungssymbol die Form eines Schlüssels hat.

5. Elektronische Waage nach Anspruch 1, **dadurch gekennzeichnet, dass** der netzausfallsichere Speicher (21) ein EEPROM ist.

6. Elektronische Waage nach Anspruch 5, **dadurch gekennzeichnet, dass** das EEPROM Teil eines Mikroprozessors ist.

7. Elektronische Waage nach Anspruch 1 oder 2, **dadurch gekennzeichnet, dass** die Waage mindestens zwei Bedienungstasten (11...14) aufweist und dass die Schaltmittel oder Programmteile zur Verriegelung (20) erst nach Eingabe eines Passwortes in die Bedienungstasten (11...14) deaktiviert werden.

8. Elektronische Waage nach Anspruch 1 oder 2, **dadurch gekennzeichnet, dass** die Schaltmittel oder Programmteile zur Verriegelung (20) durch ein spezielles Signal von der übergeordneten EDV-Anlage (15) über die digitale Schnittstelle (7) deaktiviert werden.

9. Elektronische Waage nach Anspruch 1 oder 2, **dadurch gekennzeichnet, dass** die Schaltmittel oder Programmteile zur Verriegelung (20) zusammen mit der Anzeige des Wägeergebnisses auch die Ausgabe von Wägedaten über die digitale Schnittstelle (7) freigeben oder sperren.

## Claims

1. Electronic weighing machine (1) with a display unit (9), at least one control button (11 ... 14), a digital signal processing unit (5) and a digital interface (7) to a superordinate data processing installation (15), wherein the digital signal processing unit (5) comprises activatable switching means or program parts for locking (20), **characterised in that** the activatable switching means or program parts for locking (20) free the display of the weighing result only as long as the superordinate data processing installation (15) is in communication with the weighing machine, but block for the rest of the time, and that the activation of these switching means or program parts for locking is stored in a memory (21) secure against mains power failure.

2. Electronic weighing machine according to claim 1, **characterised in that** a locking symbol (10) is present in the display unit (9) of the weighing machine and is controlled in drive on activation of the switching means or program parts for locking (20).

3. Electronic weighing machine according to claim 2, **characterised in that** the locking symbol (10) has the form of a padlock.

4. Electronic weighing machine according to claim 2, **characterised in that** the locking symbol (10) has the form of a key.

5. Electronic weighing machine according to claim 1, **characterised in that** memory (21) secure against mains power failure is an EEPROM.

6. Electronic weighing machine according to claim 5, **characterised in that** the EEPROM is part of a microprocessor.

7. Electronic weighing machine according to claim 1 or 2, **characterised in that** the weighing machine comprises at least two control buttons (11 ... 14) and that the switching means or program parts for locking (20) are deactivated only after input of a password into the control buttons (11 ... 14).

8. Electronic weighing machine according to claim 1 or 2, **characterised in that** the switching means or program parts for locking (20) are deactivated by a special signal from the superordinate data processing installation (15) via the digital interface (7).

9. Electronic weighing machine according to claim 1 or 2, **characterised in that** the switching means or program parts for locking (20) also free or block, together with the display of the weighing result, the output of weighing data via the digital interface (7).

## Revendications

1. Balance électronique (1) avec une unité d'affichage (9), avec au moins une touche de commande (11 ... 14), avec une unité numérique de traitement de signal (5) et avec une interface numérique (7) vers une installation informatique (15) hiérarchiquement supérieure, où l'unité numérique de traitement de signal (5) comporte des moyens de commutation activables ou des segments de programme (20) activables pour le verrouillage, **caractérisée en ce que** les moyens de commutation activables ou les segments de programme (20) activables pour le verrouillage autorisent l'affichage du résultat de pesage aussi longtemps que l'installation informatique (15) hiérarchiquement supérieure est en communication avec la balance, mais le verrouillent le reste du temps, et **en ce que** l'activation de ces moyens de commutation ou segments de programme (20) pour le verrouillage est archivée dans une mémoire (21) protégée contre les pannes de courant de réseau.

2. Balance électronique selon la revendication 1, **caractérisée en ce qu'**un symbole de verrouillage (10) est présent dans l'unité d'affichage (9), lequel est commandé en cas d'activation des moyens de commutation ou des segments de programme (20) pour le verrouillage.

3. Balance électronique selon la revendication 2, **caractérisée en ce que** le symbole de verrouillage (10) a la forme d'un cadenas.

4. Balance électronique selon la revendication 2, **caractérisée en ce que** le symbole de verrouillage a la forme d'une clé.

5. Balance électronique selon la revendication 1, **caractérisée en ce que** la mémoire (21) protégée contre les pannes de courant de réseau est une EEPROM.

6. Balance électronique selon la revendication 5, **caractérisée en ce que** l'EEPROM est un élément d'un microprocesseur.

7. Balance électronique selon la revendication 1 ou la revendication 2, **caractérisée en ce que** la balance comporte au moins deux touches de commande (11 ... 14), et **en ce que** les moyens de commutation ou segments de programme (20) pour le verrouillage ne sont désactivés qu'après saisie d'un mot de passe par les touches de commande (11 ... 14).

8. Balance électronique selon la revendication 1 ou la revendication 2, **caractérisée en ce que** les moyens de commutation ou segments de programme (20) pour le verrouillage sont désactivés par l'installation informatique (15) hiérarchiquement supérieure via l'interface numérique (7).

9. Balance électronique selon la revendication 1 ou la revendication 2, **caractérisée en ce que** les moyens de commutation ou segments de programme (20) pour le verrouillage autorisent ou verrouillent, conjointement à l'affichage du résultat de mesure, l'édition de données de pesage via l'interface numérique (7).
